Europäisches Patentamt

European Patent Office

Office européen des brevets

(11) Veröffentlichungsnummer: **0 477 427 A1**

## (12) EUROPÄISCHE PATENTANMELDUNG

(21) Anmeldenummer: **90118726.0**

(22) Anmeldetag: **28.09.90**

(51) Int. Cl.5: **H01S 3/03**, H01S 3/032

(43) Veröffentlichungstag der Anmeldung:
**01.04.92 Patentblatt 92/14**

(84) Benannte Vertragsstaaten:
**DE FR GB IT**

(71) Anmelder: **SIEMENS AKTIENGESELLSCHAFT**
**Wittelsbacherplatz 2**
**W-8000 München 2(DE)**

(72) Erfinder: **Krüger, Hans, Dipl.-Phys.**
**Peralohstrasse 13**
**W-8000 München 83(DE)**
Erfinder: **Welsch, Wolgang, Dr.-Ing.**
**Fuchsweg 25b**
**W-8011 Baldham(DE)**

(54) **Gaslaser mit engen Toleranzen für die Ausgangsleistung.**

(57) Ein Gaslaser mit engen Toleranzen für die Ausgangsleistung wird erreicht, indem der Laser so dimensioniert wird, daß eine Mindestleistung mit Sicherheit eingehalten wird und indem der Laser eine Einrichtung zur Erhöhung seiner Verluste, vorzugsweise eine absputterbare Schicht 5 enthält, welche nach seiner Fertigstellung bedient werden kann und beim Betrieb des Lasers keine zusätzliche Änderung der Verluste mehr hervorruft.

FIG 2

EP 0 477 427 A1

Die Erfindung betrifft einen Gaslaser nach dem Oberbegriff des Patentanspruchs 1. Ein derartiger Gaslaser ist aus der US-PS 4 943 972 bekannt.

Die Aufgabe, die der vorliegenden Erfindung zugrundeliegt, besteht in der Einengung der Toleranz für die maximale Ausgangsleistung derartiger Gaslaser. Diese Aufgabe wird bei einem Laser gemäß dem Oberbegriff durch die kennzeichnenden Merkmale des Patentanspruchs 1 gelöst. Hier werden Verluste, die insbesondere an den Spiegeln entstehen, definiert vergrößert, um Laser mit zu hoher Ausgangsleistung zu justieren, so daß sie in einem vorgegebenen Toleranzbereich für die Ausgangsleistung hineinfallen. Derartige Laser mit engen Toleranzen für die Ausgangsleistung sind insbesondere für Laserscanner notwendig, da Laserscanner aufgrund der gesetzlichen Vorschriften bestimmte Ausgangsleistungen in keinem Fall überschreiten dürfen und da andererseits die Leserate und die maximale Leseentfernung des Scanners direkt von der Laserausgangsleistung abhängen. Wegen dieser zwei Bedingungen ist ein enges Leistungsintervall für den Laser notwendig. Dieses enge Leistungsintervall ist unter Zugrundelegung der normalen Spiegel- und Kapillarverluste und Fertigungstoleranzen nicht zu erreichen.

Vorteilhaft besteht die Einrichtung zur Erhöhung der Verluste in sputterfähigem Material, welches nach dem Absputtern auch im Laserplasma nicht mehr oxidiert und sich nach einer Abscheidung auf einem Laserspiegel oder einem Brewsterfenster nicht mehr verändert. Dies ist insbesondere wichtig, da bereits sehr geringe Mengen von abgesputtertem Material die Reflexion des Spiegels verändern und eine Anhebung der Verluste hervorrufen. Oxidation oder eine nachträgliche Veränderung, z.B. einer Gefügeänderung des abgesputterten Materials würde daher bereits ausreichen, um die Verluste nachträglich und unerwünscht weiterzuverändern.

Dabei eignet sich als Einrichtung zur Vergrößerung der Verluste insbesondere eine Schicht aus einem der Stoffe Au, Pt, Pd, Ag, Cr.

Eine vorteilhafte Ausführungsform ist gegeben, indem der Gaslaser ein HeNe-Laser ist, dessen Gehäuse stirnseitig zumindest auf einer Seite durch eine Metallkappe abgeschlossen ist und/oder metallische Spiegelfassungen enthält und bei dem die Einrichtung zur Erhöhung der Verluste an der auf der Anodenseite liegenden Metallkappe oder Spiegelfassung angebracht ist. Dabei ist die Einrichtung zur Erhöhung der Verluste vorteilhaft auf einem Einsatz befestigt, dessen Stellung im Laser so angeordnet ist, daß nur dann Material abgesputtert wird, wenn die Anode negativ zur Kathode gepolt wird. Der Einsatz weist vorteilhaft zumindest eine Spitze oder eine scharfe Kante auf, welche die Einrichtung zur Erhöhung der Verluste trägt und so angeordnet und geformt ist, daß von dieser Spitze oder Kante bevorzugt Material abgesputtert wird.

Die Ausgangsleistung eines erfindungsgemäßen Lasers wird vorteilhaft durch ein Verfahren abgeglichen, bei dem an die Anode kurzzeitig eine gegenüber der Kathode negative und zum Absputtern des sputterfähigen Materials ausreichend hohe elektrische Spannung angelegt wird. Die elektrische Spannung wird dabei vorteilhaft in Form von definierten Impulsen angelegt, wobei die Zahl der Impulse entsprechend der gewünschten Veränderung der Leistung gewählt wird.

Die Erfindung wird nun anhand von zwei Figuren näher erläutert. Sie ist nicht auf die in den Figuren gezeigten Beispiele beschränkt.

FIG 1 zeigt eine Laserröhre mit einem Einsatz, auf dem eine Einrichtung zur Vergrößerung der Verluste untergebracht ist.

FIG 2 zeigt eine Ausführungsform, bei der eine Einrichtung zur Erhöhung der Verluste unmittelbar auf eine metallische Endkappe aufgebracht ist, in geschnittener und gebrochener Ansicht.

Eine Laserröhre weist auf ihrer Anodenseite eine Metallkappe 1 auf, an die eine Spiegelhalterung 2 mit einem Spiegel 3 angrenzt. Auf der Innenseite der Metallkappe 1 ist ein Einsatz 4 befestigt, auf dem als Einrichtung zur Erhöhung der Verluste eine Schicht 5 aus sputterfähigem Material aufgebracht ist. Der Einsatz 4 liegt außerhalb des Entladungskanals und des Laserstrahls, ragt aber so weit in die Nähe des Laserstrahles hinein, daß das abgesputterte Material sich auf dem Spiegel 3 niederschlagen kann. Ein Niederschlag wirkt auf dem Spiegel 3 in Richtung Erhöhung der Verluste. Dort wirken schon geringste niedergeschlagene Mengen erheblich verlusterhöhend. Dies gilt besonders für den im Beispiel gezeigten HeNe-Laser, bei dem die Laserverstärkung relativ gering ist.

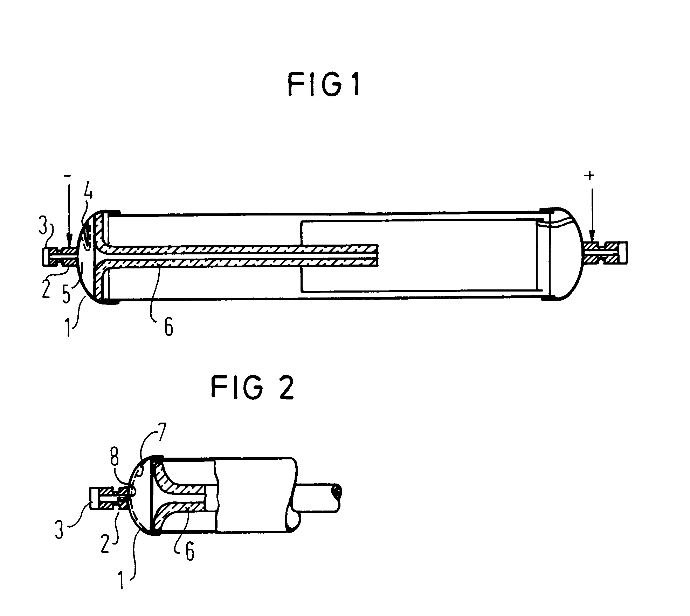

In FIG 2 ist die Spiegelhalterung im Bereich einer Kante 8, die einer Kapillare 6 des Lasers zugewandt ist, mit einer Schicht 7 aus sputterfähigem Material versehen. Die Schicht 7 kann auch die Metallkappe 1 überlappen, doch sputtert das Material in erster Linie aus dem Bereich der Kante 8 ab und erreicht daher den Spiegel 3.

Zum Absputtern wird kurzzeitig eine entsprechende negative elektrische Spannung an die anodenseitige Spiegelhalterung bzw. an die Spitze oder Kante angelegt. Die Menge des abgesputterten Materials wird vorteilhaft dadurch festgelegt, daß eine impulsförmige Spannung angelegt und die Zahl und/oder die Höhe der Impulse als Maß für die abzusputternde Menge eingesetzt wird.

**Patentansprüche**

1. Gaslaser, welcher zwei Resonatorspiegel enthält, **dadurch gekennzeichnet,** daß der Laser so dimensioniert ist, daß eine Mindestleistung mit Sicherheit eingehalten wird und daß der Laser eine Einrichtung zur Erhöhung seiner Verluste enthält, welche nach seiner Fertigstellung bedient werden kann und beim bestimmungsgemäßen Betrieb keine zusätzliche Änderung der Verluste mehr hervorruft.

2. Gaslaser nach Anspruch 1, **dadurch gekennzeichnet,** daß die Einrichtung zur Erhöhung der Verluste ein sputterfähiges Marterial ist, welches nach dem Absputtern auch im Laserplasma nicht mehr oxidiert und nach einer Abscheidung auf einem Laserspiegel oder einem Brewsterfenster keiner Veränderung mehr unterliegt.

3. Gaslaser nach Anspruch 2, **dadurch gekennzeichnet,** daß die Einrichtung zur Erhöhung der Verluste eine Schicht aus einem der Stoffe Au, Pt, Pd, Ag, Cr ist.

4. Gaslaser nach einem der Ansprüche 1 bis 3, **dadurch gekennzeichnet,** daß der Gaslaser ein HeNe-Laser mit einer Kapillare ist, dessen Gehäuse stirnseitig durch Metallkappem abgeschlossen ist und/oder metallische Spiegelhalterungen enthält und daß die Einrichtung zur Erhöhung der Verluste an einer anodenseitigen Kappe oder Spiegelhalterung angebracht ist.

5. Gaslaser nach Anspruch 4, **dadurch gekennzeichnet,** daß die Einrichtung zur Erhöhung der Verluste auf einem Einsatz befestigt ist, dessen Stellung im Laser gewährleistet, daß nur dann Material abgesputtert wird, wenn die Anode negativ zur Kathode gepolt ist.

6. Gaslaser nach Anspruch 5, **dadurch gekennzeichnet,** daß der Einsatz zumindest eine Spitze aufweist, welche die Einrichtung zur Erhöhung der Verluste trägt und so angeordnet und geformt ist, daß von dieser Spitze bevorzugt Material abgesputtert wird.

7. Gaslaser nach Anspruch 4, **dadurch gekennzeichnet,** daß die Einrichtung zur Erhöhung der Verluste eine Beschichtung der Spiegelhalterung im Bereich ihrer der Kapillare zugewandten Kante ist.

8. Verfahren zum Abgleich der Ausgangsleistung eines Lasers nach einem der Ansprüche 2 bis 7, **dadurch gekennzeichnet,** daß an die Anode kurzzeitig eine gegenüber der Kathode negative und zum Absputtern des sputterfähigen Materials ausreichend hohe elektrische Spannung angelegt wird.

9. Verfahren anch Anspruch 8, **dadurch gekennzeichnet,** daß die elektrische Spannung in Form definierter Impulse angelegt wird und daß die Zahl der Impulse entsprechend der gewünschten Veränderung der Leistung gewählt wird.

# FIG 1

# FIG 2

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| X | NEUES AUS DER TECHNIK, Nr. 3, 1. Juni 1977, Seite 3, Abschnitt: "Gasentladungslaser mit längerer Lebensdauer" * Vollständig * | 1-3 | H 01 S 3/03 H 01 S 3/032 |
| | – – – | | |
| Y | IDEM | 4 | |
| | – – – | | |
| Y | IBM TECHNICAL DISCLOSURE BULLETIN, Band 17, Nr. 1, Juni 1974, Seite 241, New York, US; J.P. KIRK: "Hot bore laser" * Vollständig * | 4 | |
| | – – – | | |
| X | US-A-4 897 848  (J. MACKEN) * Zusammenfassung; Spalte 2, Zeilen 52-56; Spalte 3, Zeilen 33-36; Abbildungen 1,2 * | 1-3 | |
| | – – – | | |
| X | PATENT ABSTRACTS OF JAPAN, Band 7, Nr. 218 (E-200)[1363], 28. September 1983; & JP-A-58 111 383 (MATSUSHITA DENKI SANGYO K.K.) 02-07-1983 * Vollständig * | 1.3 | |
| | – – – – – | | **RECHERCHIERTE SACHGEBIETE (Int. Cl.5)** |
| | | | H 01 S |

Der vorliegende Recherchenbericht wurde für alle Patentansprüche erstellt

| Recherchenort | Abschlußdatum der Recherche | Prüfer |
|---|---|---|
| Den Haag | 29 Mai 91 | MALIC K. |